Europäisches Patentamt

European Patent Office

Office européen des brevets

(19)

(11) Veröffentlichungsnummer: **0 028 287**

**A1**

(12) # EUROPÄISCHE PATENTANMELDUNG

(21) Anmeldenummer: 80104032.0

(51) Int. Cl.³: **F 02 B 23/06**

(22) Anmeldetag: **12.07.80**

(30) Priorität: **13.07.79 DE 2928441**

(43) Veröffentlichungstag der Anmeldung:
**13.05.81 Patentblatt 81/19**

(84) Benannte Vertragsstaaten:
**AT CH FR GB IT LI NL SE**

(71) Anmelder: **Elsbett, Ludwig**
**Industriestrasse 14**
**D-8543 Hilpoltstein(DE)**

(71) Anmelder: **Elsbett, Günter**
**Industriestrasse 14**
**D-8543 Hilpoltstein(DE)**

(72) Erfinder: **Elsbett, Ludwig**
**Industriestrasse 14**
**D-8543 Hilpoltstein(DE)**

(72) Erfinder: **Elsbett, Günter**
**Industriestrasse 14**
**D-8543 Hilpoltstein(DE)**

(74) Vertreter: **Merten, Fritz**
**Brückkanalstrasse 25**
**D-8501 Schwarzenbruck(DE)**

(54) **Luftverdichtende - Hubkolben - Brennkraftmaschine.**

(57) Die Erfindung bezieht sich auf eine Hubkolben-Brennkraftmaschine (1), deren Brennraum (6) sehr stark wärmedämmend ausgeführt ist, um neben bisher üblichen, flüssigen Kraftstoffen auch solche aus Pfanzen, durch deren Pulverisierung gewonnene Kraftstoffe verbrennen zu können, wobei zu diesem Zweck sowohl der Kolben (4) jedes Zylinders (2) auch der zugehörige Zylinderkopf (14) dieser wärmedämmenden Konzeption folgen als auch die Fördermittel (25) für den Kraftstoff wie auch die besondere Gemischbildung von Kraftstoff und Luft dieser Konzeption angepaßt sind.

Fig.1

EP 0 028 287 A1

Anmelder:             Herren Ludwig Elsbett, Ing.-grad
                             Günter Elsbett
                           Industriestraße 14
                           D-8543 Hilpoltstein / BRD


Vertreter:             Fritz  M e r t e n
                           Patent- und Zivilingenieur
                           Brückkanalstraße 25
                           D-8501 Schwarzenbruck / BRD


Zustellungsbevollmächtigter:            siehe Vertreter


Schwarzenbruck, den 8.7.1980

---

T i t e l :                  Luftverdichtende Hubkolben-Brenn-
                              kraftmaschine

Die Erfindung bezieht sich auf eine luftverdichtende Hubkolben-Brennkraftmaschine mit direkter Einspritzung eines
Kraftstoffes in einen, insbesondere drehsymmetrisch ausgeführten und in einem Kopf eines Kolbens angeordneten Brennraum, und mit drallbildendem Einlaßorgan für eine in diesen
Brennraum mit Drall um eine Brennraumachse einzubringende
Verbrennungsluft, wobei die Einspritzung des Kraftstoffes
in einen Wirbel der drehenden Verbrennungsluft erfolgt und
dort ein Kraftstoffstrahl der Einspritzung die einzelnen Luftschichten des Wirbels im Bereich der Schwerkreise derselben tangiert, und diese drehenden Luftschichten in den Kraftstoffstrahl hineingedreht werden, und bei welcher Brennkraftmaschine der Brennraum wärmedämmend ausgeführt ist, wobei durch diese Wärmedämmung des Brennraumes nur geringe Wärmeanteile aus der Verbrennung von Kraftstoff und Verbrennungsluft an den jeweiligen Zylinder der Brennkraftmaschine abgeführt werden.

Es ist allgemein bekannt, luftverdichtende Hubkolben-Brennkraftmaschinen, wie Otto-Motoren, Dieselmotoren u. a., mit flüssigen, fossilen Kraftstoffen, z. B. Benzinen, Dieselölen oder gasförmigen Kraftstoffen, z. B. Gasen, zu betreiben. Im Zuge einer weltweit zunehmenden Rohstoffverknappung und einer damit ausgelösten Verteuerung solcher für Brennkraftmaschinen verwendbaren Energieträger erhebt sich die Forderung nach drastischer Einsparung der vorrätigen, insbesondere fossilen Energieträger, was zum einen mit Energie sparenden Brennkraftmaschinen und zum andern mit dem Erlaß von Fahrverboten möglich erscheint. Solche Forderungen rufen aber sehr einschneidende Maßnahmen hervor und sind geeignet, den Verkehr, und hier insbesondere den Straßenverkehr, entscheidend zu beeinträchtigen. Um solchen einschneidenden Maßnahmen entgegenzuwirken, sind Verbrennungsverfahren und hierfür angepaßte Brennkraftmaschinen entwickelt worden, die sich durch eine geordnete Verbrennung von Luft- und Kraftstoffbestandteilen bei weitgehend optimierter Ausnutzung dieser Bestandteile auszeichnen.

Eine bekannte Brennkraftmaschine mit einem gegenüber anderen bekannten Brennkraftmaschinen geringeren Kraftstoffverbrauch wird im wesentlichen von einem Motorblock mit darin angeordneten Kolben-Zylinder-Antrieben gebildet, von denen die Zylinder zum einen von einem Kurbelgehäuse und zum andern von einem Zylinderkopf abgeschlossen werden, und bei der die Brennräume überwiegend im jeweiligen Kolben angeordnet und der Zylinderkopf zumindest in dessen Kanälen für die Ansaugluft mit drallbildenden Organen ausgestattet ist. Die Verbrennungs- bzw. Ansaugluft, die unter einem stark ausgeprägten Drall um die jeweilige Brennraumachse in den
Brennraum eingebracht wird, rotiert als Wirbel in diesem
Brennraum, und es wird in die drehenden Luftschichten dieses Wirbels eine vorbestimmte Menge eines Kraftstoffes
während einer vorbestimmten Förderdauer eingespritzt. Die
Einspritzung dieses Kraftstoffes in diesen Wirbel erfolgt
dabei im Bereich der Schwerkreise, das ist der 0,65 bis
0,7 fache Durchmesser, der einzelnen Luftschichten des Wirbels, wodurch der Wirbel durch den Kraftstoffstrahl in einen
inneren Wirbelkern und einen diesen ummantelnden Wirbelring
geteilt wird. Die theoretische Teilung dieses Wirbels ist
dabei so getroffen, daß im Wirbelkern etwa die gleiche Luftmenge wie im Wirbelring sich befinden. Die Verbrennung der
Kraftstoff- mit den Luftbestandteilen wird nach jeweils
vorausgehender Vermischung dieser Bestandteile vom Wirbelkern zum Wirbelring eingeleitet, so daß die sich zwischen
den Schwerkreisen der einzelnen Luftschichten und der Wand
des Brennraumes sich befindenden Luftbestandteile von der
Brennzone erst dann erfaßt werden, wenn die zwischen den
Schwerkreisen und der Brennraumachse sich befindenden Luftbestandteile bereits weitgehend verbrannt sind. Für eine,
insbesondere stöchiometrische, Verbrennung dieser Luft- mit
den Kraftstoffbestandteilen werden die Luftpartikel der
einzelnen Luftschichten bei gleicher Winkelgeschwindigkeit
einmal in den Kraftstoffstrahl während der Einspritzdauer
gedreht, wodurch sichergestellt wird, daß nur soviel Kraftstoff an Luftbestandteil gebunden wird, wie für dessen
stöchiometrische Verbrennung erforderlich ist. Diese Brennkraftmaschine arbeitet nicht nur mit einem sehr guten Wirkungsgrad, sondern sie wird durch dieses besondere Verbrennungsverfahren auch geringer aufgeheizt, wodurch Wärmeverluste eingespart werden (vgl. DE-PS 15 76 014).

Um einerseits Wärmeverluste aus der Verbrennung von Kraftstoff- und Luftbestandteilen abzubauen und andererseits Reibungsverluste, insbesondere aus der Bewegung des jeweiligen
Kolbens im Zylinder, zu reduzieren, ist eine weitere Brenn-

0028287

kraftmaschine mit im Kolben vorgesehenem Brennraum bekannt, bei der der Brennraum wärmedämmend und der Kolben als Gelenkkolben ausgebildet ist. Der Brennraum, der beispielsweise kugel- oder topfförmig ausgeführt sein kann, ist mit Ausnahme seines im Zylinder befindlichen Anteiles überwiegend im Kolben vorgesehen und dort so angeordnet, daß dessen Öffnung in der Ebene des Kolbenbodens liegt. Der Gelenkkolben wiederum wird von einem dichtenden und einem führenden Abschnitt, welche über einen gemeinsamen Bolzen gelenkig miteinander verbunden sind, gebildet und weist in seinem dichtenden Abschnitt den Brennraum auf, und es ist dieser Brennraum durch wärmedämmende Mittel sowohl gegen einen das Hemd des Kolbens bildenden Ringträger als auch gegen den Fuß des Kolbens abgeschirmt. Die wärmedämmenden Mittel, die als Einbauten im Brennraum und/oder Einschnürungen zwischen Brennraumwand und Ringträger bzw. Fuß ausgeführt sein können, bewirken eine sehr starke Reduzierung des Wärmeflusses zum Fuß bzw. Ringträger, so daß die Wärme aus der Verbrennung von Kraftstoff- mit Luftbestandteilen weitgehend im Brennraum gehalten wird und dem schnellen Aufheizen der nachfolgenden, der Verbrennung zugeführten Kraftstoff-Luftbestandteile dient. Durch diese Drosselung des Wärmeflusses, insbesondere vom Brennraum zum Ringträger, wird dieser sehr wenig aufgeheizt, so daß auch die über die Kolbenringe des Ringträgers an die Zylinderwand zu übertragende Wärme eine sehr geringe Aufheizung des Zylinders bewirkt. Durch diese geringe Aufheizung von Ringträger und Zylinder lassen sich die Gleitspiele zwischen Ringträger und Zylinder auf übliche Gleitlagerspiele mit etwa 1/1000 Spiel reduzieren, wodurch nicht nur eine thermische Belastung, insbesondere des ersten Kolbenringes, reduziert wird, sondern auch der Schmierölfilm an der Zylinderwand weitgehend erhalten bleibt. Die Erhaltung des Schmierölfilms hat wiederum zu Folge, daß aditive Verbrennungsrückstände sich kaum an der Wand des Zylinders bilden, wodurch die Standzeit des Kolbens und damit auch die der Brennkraftmaschine verlängert werden (vgl. DE-PS 25 45 588).

Der Erfindung liegt die Aufgabe zugrunde, eine luftverdichtende Hubkolben-Brennkraftmaschine dahingehend weiterzubilden, daß unter Beibehaltung eines geringen Kraftstoffverbrauches einerseits und guter Abdichtverhältnisse des jeweiligen Kolbens gegen dessen Zylinderwand andererseits die Reibverluste des Kolben-Zylinder-Antriebes reduziert bleiben, und die Brennkraftmaschine mit jedem spritzfähigen bzw. blasfähigen Kraftstoff, insbesondere einer nachwachsenden Biomasse, unter geringem Anfall von Schadstoffimmissionen, betrieben werden kann.

Gemäß der Erfindung wird diese Aufgabe mit einer Brennkraftmaschine der eingangs genannten Art dadurch gelöst, daß der Kraftstoffstrahl fest, flüssig und/oder gasförmig unter einem solchen Winkel in den Brennraum eingebracht und dieser der rotierenden Verbrennungsluft, wie auch einer Verdampfungsgeschwindigkeit durch thermische Einwirkung ausgesetzt wird, daß dieser Kraftstoff in allen seinen Zustandsphasen, wie fest, flüssig, dampfförmig und/oder brennend, zur Mitte des Brennraumes hin umgelegt wird, und zwischen sich und einer einsetzenden Brennzone einen Abstand von der Wand des Brennraumes, insbesondere während des Verbrennungsvorganges, beibehält.

Durch diese Maßnahmen wird nicht nur die der Erfindung zugrundeliegende Aufgabe vorteilhaft gelöst, sondern es wird darüber hinaus eine Brennkraftmaschine geschaffen, bei der verschiedene Arten von Kraftstoffen als Energieträger verwendet werden können. Durch die wärmedämmende Ausführung des Brennraumes wird ein großer Teil der Verbrennungswärme im Brennraum gehalten, so daß auch schwer brennbare Energieträger, wie beispielsweise Holzstaub u. ä., zu einer schnellen Entzündung kommen. Mit der Möglichkeit der Verbrennung solcher nachwachsender Biomassen bzw. Kraftstoffen wird die Gewinnung eines Energieträgers ermöglicht, der nicht nur Engpässe in der Energieversorgung überbrücken kann, sondern infolge seiner schadstofflosen Struktur das Problem der zunehmenden Umweltbelastung entscheidend mit zu lösen vermag.

Im Gegensatz zu fossilen Kraftstoffen, die einen größeren
Kohlendioxidgehalt der atmosphärischen Luft schaffen, vermögen solche aus Biomassen gewonnenen Kraftstoffe bzw. deren pflanzlichen Ausgangsmaterialien diesen Kohlendioxidgehalt zu stabilisieren bzw. ein Überangebot davon abzubauen. Voraussetzung für einen besonderen Kreislauf des
Kohlendioxids über Pflanze und Brennkraftmaschine ist nicht
nur die Umstellung des Brennverfahrens und damit auch der
Brennkraftmaschine auf einen sparsamen Wärmehaushalt und gegebenenfalls auch eine nach Art des Dieselverfahrens ablaufenden Verbrennung mit einer längeren Expansion, sondern
es muß auch das Verbrennungsverfahren mit besonderem Misch-
und Brennablauf auf die geringere Zündempfindlichkeit eingestellt werden. Erst durch die erfindungsgemäßen Maßnahmen
mit erhöhter Wärmedämmung und Ordnung des Verbrennungsablaufes ist es möglich, aus Biomasse gewonnene Kraftstoffe,
wie z. B. Holzstaub, mit einem guten Wirkungsgrad zu verbrennen.

Eine vorteilhafte Weiterbildung der Erfindung zeichnet sich
ferner dadurch aus, daß die Form des Brennraumes und die
Rotation aller Luftschichten in diesem so aufeinander abgestimmt sind, daß in allen Luftschichten die Luft während
der Einspritzung des Kraftstoffes in den Brennraum in einer
Vollast-Einspritzzeit von $25^O \pm 5^O$ Kurbelwinkel einmal am
Kraftstoffstrahl vorbeigedreht wird.

Durch diese Maßnahmen wird sichergestellt, daß dem eingespritzten Kraftstoff eine ausreichende Luftmenge zur Verfügung gestellt wird, so daß kaum bereits verbrannter Kraftstoff an frischer Luft oder umgekehrt gebunden wird.

In Fällen, in denen als Kraftstoff neben einem flüssigen
Bestandteil auch ein feststofförmiger, z. B. Holzstaub, verwendet wird, zeichnet sich ein weiteres Merkmal der Erfindung dadurch aus, daß für das Einbringen des Kraftstoffes
in den Brennraum, wie an sich bekannt, Fördermittel dem
Brennraum vorgelagert sind, und daß diese Fördermittel je nach Art des Kraftstoffes auch weitere, die Energie des Einbringens des Kraftstoffes in den Brennraum aufzubringende Förderteile, insbesondere für feste Bestandteile des Kraftstoffes, aufweisen.

Um insbesondere die festen Bestandteile des Kraftstoffes mit der für deren Einblasung in den Brennraum erforderlichen Förderintensität einzubringen, besteht ein weiteres Merkmal der Erfindung darin, daß die Förderteile von einer Nebenkammer gebildet werden, und daß die Energie dieser Nebenkammer auf die Energie der im Brennraum rotierenden Luftschichten abgestimmt ist.

Auch kann nach einem weiteren Merkmal der Erfindung die Energie der Nebenkammer für alle Lastbereiche der Brennkraftmaschine konstant haltbar sein, und es kann bei Teillast nur ein Teil der im Brennraum rotierenden Verbrennungsluft mit dem Kraftstoff stöchiometrisch mischbar sein.

Eine weitere erfinderische Maßnahme einer solchen Brennkraftmaschine besteht darin, daß diese, wie an sich bekannt, drei Zylinder aufweist, und daß diese Zylinder zum Zwecke eines größeren Abstandes zwischen dem Strahl des eingespritzten Kraftstoffes und einer den Brennraum jeden Zylinders begrenzenden Wand ein großes Hubvolumen aufweisen.

Untersuchungen mit einer solche Merkmale aufweisenden Brennkraftmaschine haben ergeben, daß es ausreichend ist, zum Zwecke des Verringerns des Heizwertbedarfes für die Verbrennung des Kraftstoffes, die drei Zylinder um nur einen Kurbelhub gegeneinander versetzt anzuordnen.

Damit ergibt sich eine gedrängte Konstruktion einer solchen Brennkraftmaschine mit dem Vorteil einer universellen Einbaumöglichkeit, ohne dabei auf die Vorteile des geringen Kraftstoffverbrauches und einer für einen solchen Hubraum bereits ausreichenden Leistung verzichten zu müssen.

Durch alle diese Maßnahmen und stets in Verbindung derselben mit einer Brennkraftmaschine mit äußerst sparsamen
Wärmehaushalt lassen sich auch pflanzliche Stoffe mit geringerem Heizwert als übliche Erdölprodukte als Kraftstoffe
anwenden, wobei je nach Heizwert solcher Kraftstoffe auch
ausreichende Fahrstrecken mit einer Tankfüllung zurückgelegt werden können. Entscheidend für die Möglichkeit einer
solchen Verbrennung ist dabei, daß der Abstand der Verbrennung von der Brennraumwand möglichst groß ist. Mit Hilfe
der Wärmedichtheit des Brennraumes kann auch die Unempfindlichkeit der Zündfähigkeit des Kraftstoffes verbessert werden, so daß die vorgenannten pflanzlichen Feststoffe verbrannt werden können. Da bei dieser Brennkraftmaschine der
zentrale Mischvorgang auch für eingeblasene statt eingespritzte Kraftstoffe der gleiche bleibt, kommt es nicht vor,
daß Rückstände, wie Asche u. a., in größeren Anteilen an die
Wand des Zylinders gelangen, wo sie durch schmirgelnde Ablagerungen die Lebensdauer, insbesondere die der Kolben, beeinträchtigen.

Bei diesem wohlgeordneten Mischverfahren steigt die Ausnutzung des vorhandenen Luftvolumens zur Verbrennung auf
etwa 90 %, weil nur eine Brennstelle und nicht mehrere durcheinanderlaufende Brennzonen vorhanden sind. Wenn aber 90 %
statt 70 % der Luft verbrannt werden können, und außerdem
viel Wärmeverluste eingespart werden, eignet sich ein solches Verfahren besonders für den Übergang auf Feststoffverbrennung, die als Endziel des verbesserten Verfahrens angesehen wird, ganz gleich, ob diese Stoffe in fester, verflüssigter oder vergaster Form in den Brennraum gelangen.

Die gute Wärmedichtheit durch wandferne Brennzonen, Fortfall
von Kammern, Brennern und unkontrollierten Gaswirbeln erlaubt es, die Stirnseiten des Brennraumes mit einem wärmeisolierten Kolben und einem Zylinderkopf ohne Wasserkerne
oder Kühlrippen zu verschließen.

Die gewonnene Luftwärme wird durch ein verlängertes Ausdehnungsverhältnis im Kolbenhub und gegebenenfalls auch einer Abgasturbine ausgenutzt, denn bei der größeren Wärmedichtheit kann das Verdichtungsverhältnis erhöht werden, und bei der höheren Luftausnutzung des Verbrennungsverfahrens erhöht sich der Arbeitsdruck der Abgasturbine zum Antrieb des Kolbens beim jeweiligen Gaswechsel. Es hat sich ferner gezeigt, daß bei diesem Verfahren der Ladedruck auf den Kolben bereits höher ist als der Ausschiebedruck gegen die Abgasturbine. Auch hat sich herausgestellt, daß die Leistung des Kühlgebläses auf ca. 50 Watt pro 100 KW Motorleistung vermindert werden kann, da durch die Wärmedämmung des Brennraumes kaum Kühlleistung benötigt wird. Es können also auch schwere Lastwagen-Motoren mit von der Lichtmaschine getriebenem Kühlgebläse ausgestattet werden, was wesentlich bessere Motorauslegungen zuläßt und Brennstoffeinsparungen bringt.

Zur Reduzierung des zugeführten Heizwertbedarfs gehört es auch, daß das Motorschmieröl im Wärmehaushalt seine Verwendung findet. So genügt es, das Altöl, was laufend oder beim Ölwechsel dem Motor entnommen wird, durchaus, um als Einblashilfe für das Einbringen des Kraftstoffes in den Brennraum des Arbeitszylinders zu verwenden. Da es recht aufwendig ist, Preßluft auf den erforderlichen Einblasdruck zu bringen und zu steuern, kann eine kleine Brennkammer angeordnet werden, mit deren Hilfe jede Art Kraftstoff in den Zylinder geblasen werden kann, und die zudem so wenig Energie benötigt, daß dazu auch die Einspritzung des anfallenden Altöls als Einblashilfe genügt. Damit werden auch Start- und Leerlaufprobleme der Feststoffverbrennung besser gemeistert.

Es hat sich ferner gezeigt, daß bei der Verbrennung von Feststoffen die Spitzentemperatur um den Betrag der spezifischen Wärme der größeren Brennstoffmasse kälter bleibt, was sich günstig auf die Abgase, insbesondere in bezug auf

Stickoxyde (NOx-Abgaswert) auswirkt. Von Asche und Ruß kann das Abgas bei Bedarf durch ein nachgeschaltetes elektrostatisches Filter gereinigt werden, weil diese Partikel durch das zentrale Brennverfahren in Schwebe gehalten werden.

Das so angestrebte Prinzip der verbesserten Wärmedichtheit wird umso wirkungsvoller, je mehr auch die übrige Motorkonstuktion dem Grundprinzip zugeordnet wird. So ist z. B. die Brennzone umso leichter von der Brennraumwand fernzuhalten, je größer das einzelne Zylindervolumen ist. Untersuchungen haben auch ergeben, daß es vielfach besser ist, statt sechs Zylinder in Reihe, das gleiche Volumen in nur drei Zylindern unterzubringen und diese um nur eine Kurbelkröpfung anzuordnen. Statt gut wärmeleitendem Aluminium wird für alle Brennraumteile, wie Kolben, Zylinderkopf und Zylinder nur schlechtleitende Stahl- und Eisenlegierung verwendet. Da auch durch den reduzierten Kühlbedarf praktisch nur noch eine Ölkühlung erforderlich ist, ist man in der Motoranordnung freier und kann den Motor mit dem Getriebe zusammen auf jede Achse des Fahrzeuges setzen und so durch Zu- und Abschalten den Motor stets in seinem optimalen Wärmehaushaltsbereich betreiben.

Weitere vorteilhafte Weiterbildungen der Erfindung können insbesondere den verbleibenden Unteransprüchen entnommen werden.

In den Zeichnungen sind einige Ausführungsbeispiele der Erfindung schematisch dargestellt. Es zeigt:

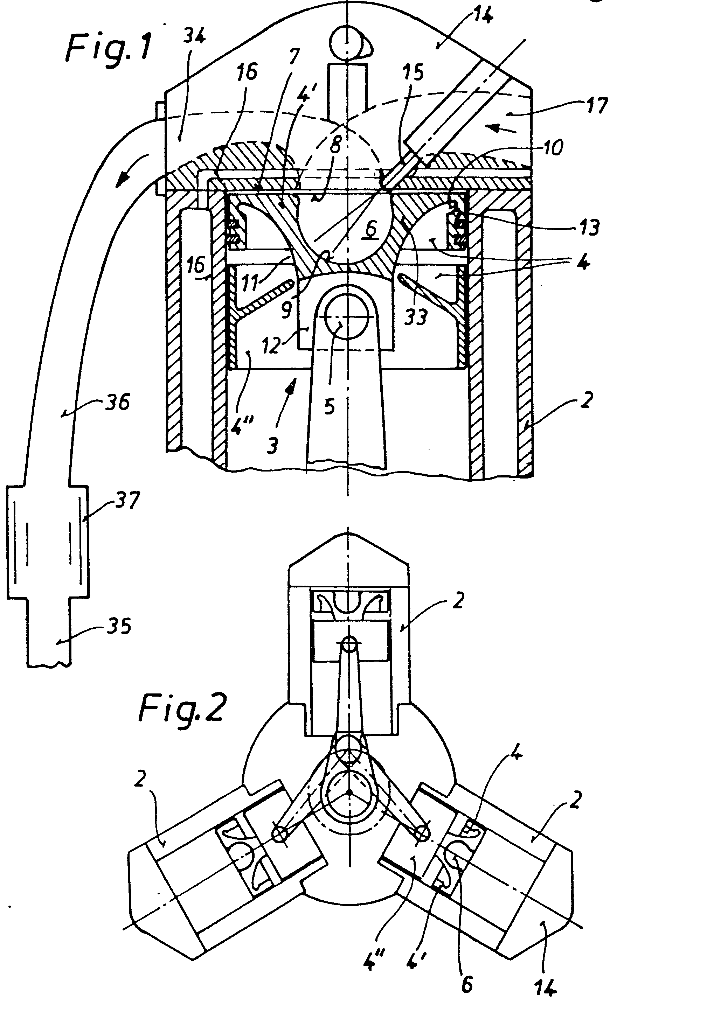

Fig. 1 einen Querschnitt durch einen Zylinder einer Brennkraftmaschine mit einem im Kolben vorgesehenen Brennraum mit Einspritzdüse sowie Ein- und Auslaßkanal im Zylinderkopf,

Fig. 2 einen Querschnitt durch eine 3-Zylinder-Brennkraftmaschine,

Fig. 3    einen Längsschnitt durch einen Kolben mit einem
          darin vorgesehenen Brennraum sowie einer im Brennraum rotierenden Verbrennungsluft und den Kraftstoffstrahl während der Einspritzung eines flüssigen oder gasförmigen Kraftstoffes,

Fig. 4    einen Längsschnitt durch einen Kolben mit darin
          vorgesehenem Brennraum mit vorgelagerter Vor- oder
          Wirbelkammer und ein Brenngemisch während dessen
          Einbringen in den Brennraum,

Fig. 5    einen Längsschnitt durch einen Kolben mit darin
          vorgesehenem Brennraum und einer in den Brennraum
          ragenden Glühkammer für einen flüssigen und/oder
          gasförmigen Kraftstoff,

Fig. 6    einen Längsschnitt durch einen Kolben mit darin
          vorgesehenem Brennraum und einen mit Preßluft oder
          Gas eingeblasenen Kraftstoff aus pulveriertem Feststoff,

Fig. 7    einen Längsschnitt durch einen Kolben mit darin
          vorgesehenem Brennraum sowie diesem vorgelagerten
          Fördermittel für den Kraftstoff nebst Zündungspumpe und Nebenkammer und

Fig. 8    einen Schnitt durch den Kolben in der Ebene VIII-
          VIII in Fig. 3.

Die Brennkraftmaschine wird im wesentlichen von mindestens
einem in einem Zylinder auf und ab bewegbaren Kolbentrieb
gebildet, wobei dieser wiederum einen aus einer dichtenden
und einer führenden Einheit bestehenden Kolben aufweist.
Der Kolben, dessen dichtende Einheit mittels eines Bolzens
gelenkig mit der führenden Einheit verbunden ist, weist in
der dichtenden Einheit einen vorzugsweise rotationssymmetrischen Brennraum auf, der z. B. als Kugelraumabschnitt ausgeführt und mit einer im Kolbenboden liegenden Öffnung aus-

geführt sein kann. Der im Kolben vorgesehene Brennraum ist
wärmedämmend ausgeführt, wobei die Wärmedämmung entweder
durch eine Auskleidung der Brennraumwände oder durch Drosselstellen im Bereich des Kolbenfußes und im Bereich des
zu einem Ringträger mündenden Mantels der dichtenden
Einheit vorgesehen sein können. Diese als Drosselstellen
ausgeführte Wärmedämmungen stellen starke Einschnürungen
des Kolbenmaterials dar, wodurch die aus der Verbrennung
der Kraftstoff- mit den Luftbestandteilen entstehende Wärme
am Übergang vom Brennraum zum Ringträger einerseits und
vom Brennraum in den Fuß des Kolbens weitgehend gehindert
wird. Durch diese Wärmedämmung wird die Verbrennungswärme
überwiegend im Brennraum bzw. an den Brennraumwänden und
hier insbesondere im Bereich der Brennraumöffnung gehalten,
wodurch für die anschließende Verbrennung der Kraftstoffbestandteile mit denen der Luft eine den Kraftstoff schneller
zündende Temperatur diesem angeboten werden kann. Durch
diese starke Wärmedämmung des Brennraumes wird eine hohe
Zündtemperatur in diesem gehalten, wodurch auch weniger
zündwillige Kraftstoffe, wie beispielsweise solche aus
pulverisierten Pflanzen u. ä., schneller zur Entzündung
kommen, so daß auch solche einen geringeren Heizwert aufweisende Kraftstoffe mit einem ausreichenden Wirkungsgrad
und hoher Luftausnutzung verbrannt werden können. Die Wärmedämmung des Brennraumes wird auch auf den Zylinderkopf ausgedehnt, der vorzugsweise aus einem schlecht Wärme leitenden Material, wie beispielsweise Grauguß, gefertigt und
lediglich an seinen stark aufheizbaren Stellen, wie Steg
zwischen den Ventilöffnungen, Einspritzdüse und gegebenenfalls Sitzring des Auslaßventils, noch gekühlt wird. Für
die Kühlung dieser sich aufheizenden Stellen kann eine Kühlmittelbohrung vorgesehen werden, durch die ein Kühlmittel,
z. B. ein Kühlöl, gezielt geleitet wird. Die übrige Konzeption des Zylinderkopfes bleibt, wie auch bei anderen Brennkraftmaschinen, unverändert, und es kann der Einlaßkanal
für die Ansaugluft in an sich bekannter Weise an einem Turbolader angeschlossen sein.

0028287

Eine bevorzugte Ausführungsform einer solchen Brennkraftmaschine kann eine mit drei Zylindern sein, deren Arbeitstakte in bekannter Weise versetzt sind.

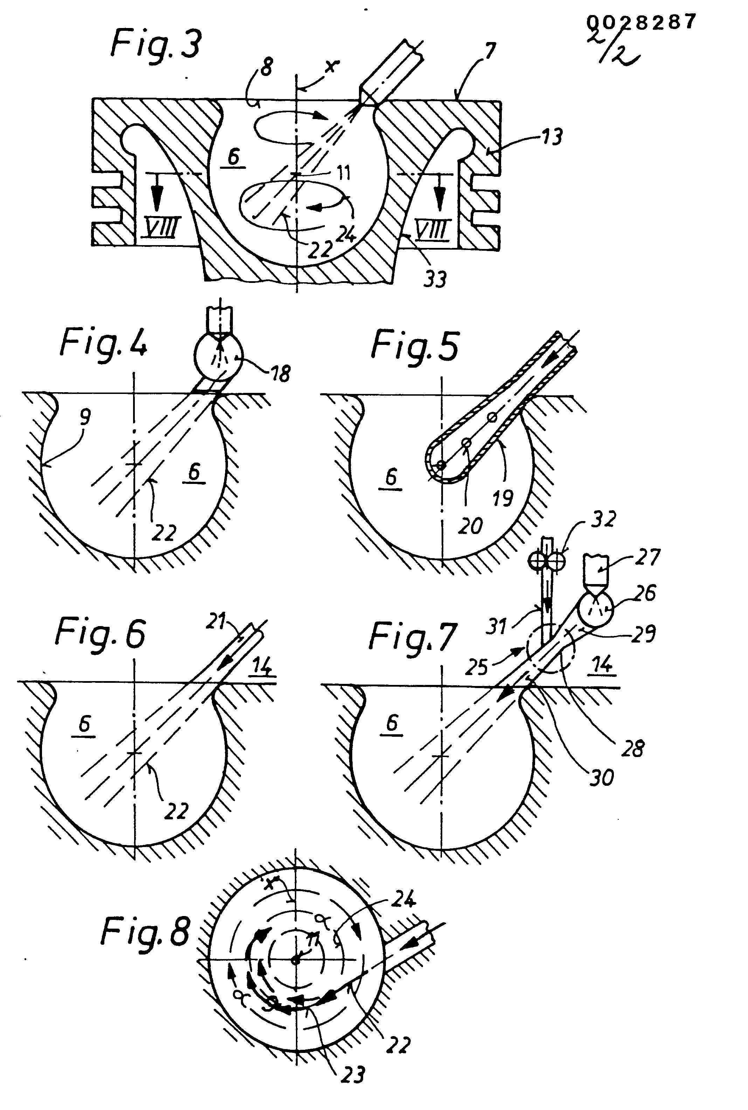

Die jeweils zu wählende Brennraumform hängt stark von der
Art des zu verbrennenden Kraftstoffes ab, die die in den
Figuren 3 bis 8 dargestellten Konfigurationen aufweisen.

Während bei den Figuren 3 und 4 an sich bekannte Brennkraftmaschinen mit direkter Kraftstoffeinspritzung (Fig. 3) bzw.
mit Einführung eines Zündgemisches über eine Vor- bzw.
Wirbelkammer dargestellt sind, ragt in den Brennraum nach
der Ausführung gemäß Figur 5 eine Glühkammer hinein, die
mit in den Brennraum mündenden Öffnungen ausgestattet ist,
durch die ein in der Glühkammer aufbereiteter Kraftstoff
in den Brennraum entlassen wird. Auf diese Weise wird dem
Brennraum ein sehr zündwilliges, in Dampfform vorliegendes
Kraftstoffgemisch angeboten, das dann im Brennraum zur Verbrennung kommt.

Bei der Ausführung der Brennkraftmaschine insbesondere für
die Verbrennung pflanzlicher Feststoffe, wie beispielsweise
Holzstaub, ist im Zylinderkopf der Brennkraftmaschine eine
rohrförmige Einblasdüse vorgesehen, durch die dieser Kraftstoff, wie auch bei den anderen Ausführungen gemäß Figuren
3 bis 5, unter einem schrägen Winkel in den Brennraum eingeblasen wird. Auch bei dieser Ausführung wird der Kraftstoff in den Bereich der Schwerkreise der Luftschichten eingeblasen, so daß dieser diese Luftschichten in einen inneren Drallwirbel und einen äußeren Drallring schneidet.

Bei der Ausführung nach Fig. 7 sind dem Brennraum besondere
Fördermittel für das Aufbereiten und Einbringen des Kraftstoffes in den Brennraum vorgelagert, wobei diese Fördermittel im wesentlichen von einer Nebenkammer, in die eine
Kraftstoffeinspritzdüse für einen flüssigen Kraftstoff mündet, ferner von einer Mischdüse, die zum einen über einen
Kanal mit der Nebenkammer und über einen weiteren Kanal bzw.

ein Blasrohr mit dem Brennraum verbunden ist und in die
der Förderstutzen einer den in Festform bzw. Staubform vorliegenden Kraftstoff fördernde Pumpe einmündet, gebildet
werden. Bei dieser Ausführung kann als flüssiger Kraftstoff,
der als Einblashilfe dient, z. B. ein Altöl verwendet werden, welches in einem entsprechenden Mischungsverhältnis
mit dem übrigen Kraftstoff verbrannt werden kann.

Die Schnittdarstellung des Brennraumes verdeutlicht die Verhältnisse von Luft und Kraftstoff in diesem, wobei die Luft
um die Brennraumachse mit dem Rotationswinkel gedreht und
der Kraftstoff in den Bereich der Schwerkreise der Luftschichten eingebracht wird, wo er dort den Wirbel der Luft
in einen inneren Wirbelkern und einen äußeren Wirbelring
teilt. Die Lage bzw. der Neigungswinkel des Kraftstoffstrahles zur Lage der Luftschichten ist dabei so gewählt,
daß bei Vollast alle Luftschichten vom Kraftstoffstrahl gekreuzt werden. Dabei ist die tangentiale Lage des Kraftstoffstrahles zu den Luftschichten bzw. deren Schwerkreise
so gehalten, daß zwischen der Brennraumachse und den Schwerkreisen genau so viel Luft vorhanden ist, wie zwischen den
Schwerkreisen und der Wand des Brennraumes. Die Einspritzung
des Kraftstoffes beträgt bei allen Ausführungen $25^{O} \pm 5^{O}$
Kurbelwinkel der Kurbelwelle.

Wie bereits angedeutet, arbeitet die Brennkraftmaschine mit
einer sehr hohen Wärmeenergie der Luft im Arbeitszylinder,
was dadurch erreicht wird, daß die dichtende Einheit des
Kolbens, die von der führenden Einheit abgetrennt ist, sehr
wärmedämmend ausgeführt ist, und was durch eine weitere Wärmedämmung im Zylinderkopf, denn dieser weist weder Wasserkerne
noch Kühlrippen auf, bewirkt wird. Der Wärmedämmung dienen
auch die zentrifugalen Kräfte der im Brennraum rotierenden
Verbrennungsluft, die stets die noch kalten Luftbestandteile
radial nach außen, d. h. zur Brennraumwand, und die bereits
angewärmten Luftbestandteile zur Brennraummitte drängen.

0028287

Der wärmedichte Misch- und Brennvorgang macht es auch möglich, den Kolben so zu gestalten, daß dessen Brennraum von der Zylinderwand sehr stark wärmeisoliert ist. Der Verlauf des Mantels des Brennraumes folgt einer thermischen Abtrennung des Ringträgers vom Fuß des Kolbens, soweit dies statisch zulässig ist. Diese thermische Abtrennung wird besonders dadurch möglich, daß statt bisher Aluminium hier Stahl oder eine andere wärmedämmende Eisenlegierung verwendet werden kann. Lediglich bei Hochleistungsbrennkraftmaschinen kann für den ohne Wasserkerne und Kühlrippen ausgeführten Zylinderkopf eine Wasser- oder besser Ölbohrung als lokale Kühlung der besonders wärmegefährdeten Stellen, wie Einspritzdüse, Steg zwischen den Ventilen und gegebenenfalls auch Sitzring des Auslaßventils, vorgesehen werden, falls über die Düse verkokungsempfindliche Kraftstoffe eingespritzt bzw. eingeblasen werden. Für die erforderliche Rotationsgeschwindigkeit der Verbrennungsluft kann im Einlaßkanal ein drallbildendes Organ vorgesehen sein, welches der Luft eine um die Brennraumachse sich auswirkende Drehung verleiht. Für besondere Ausführungen solcher Brennkraftmaschinen kann in einer den Auslaßkanal mit einem Auspuff verbindenden Leitung gegebenenfalls neben einer Abgasturbine auch ein elektrostatisches Filter vorgesehen werden, welches die besonders bei Feststoffverbrennung anfallenden Ruß- und Aschepartikel festhält.

0028287

Anmelder:    Herren Ludwig Elsbett, Ing.-grad.

         Günter Elsbett

         Industriestraße 14

         8543 Hilpoltstein/BRD


Vertreter:     Herr Fritz Merten
         Patent- und Zivilingenieur

         Brückkanalstraße 25

         8501 Schwarzenbruck/BRD


Zustellungsbevollmächtigter:   siehe Vertreter


Schwarzenbruck, den 8. 7. 1980


P A T E N T A N S P R Ü C H E
================================

1. Luftverdichtende Hubkolben-Brennkraftmaschine mit
   direkter Einspritzung eines Kraftstoffes in einen, insbesondere drehsymmetrisch ausgeführten und in einem Kopf
   eines Kolbens angeordneten Brennraum und mit drallbildendem Einlaßorgan für eine in diesen Brennraum mit
   Drall um eine Brennraumachse einzubringende Verbrennungsluft, wobei die Einspritzung des Kraftstoffes in den
   Wirbel der drehenden Verbrennungsluft erfolgt und dort
   die einzelnen Luftschichten im Bereich deren Schwerkreise tangiert und die drehenden Luftschichten in den
   Kraftstoffstrahl hineingedreht werden, und bei welcher
   Brennkraftmaschine der Brennraum wärmedämmend ausgeführt,

E - 49
me/sw

in der Art, daß nur geringe Wärmeanteile aus der Verbrennung von Kraftstoff und Verbrennungsluft an den
jeweiligen Zylinder der Brennkraftmaschine abgeführt
werden, dadurch gekennzeichnet, daß der Kraftstoffstrahl fest, flüssig und/oder gasförmig unter einem
solchen Winkel in den Brennraum eingebracht und dieser
der rotierenden Verbrennungsluft, wie auch einer Verdampfungsgeschwindigkeit durch thermische Einwirkung
ausgesetzt wird, daß dieser Kraftstoff in allen seinen
Zustandsphasen, wie fest, flüssig, dampfförmig und/oder
brennend, zur Mitte des Brennraumes hin umgelegt wird,
und zwischen sich und einer einsetzenden Brennzone
einen Abstand von der Wand des Brennraumes, insbesondere
während des Verbrennungsvorganges, beibehält.

2. Brennkraftmaschine nach Anspruch 1, dadurch gekennzeichnet,
daß der Winkel der Einspritzung des Kraftstoffes in den
Brennraum so eingestellt ist, daß zwischen dem Strahl
des Kraftstoffes und der Wand des Brennraumes mehr Verbrennungsluft rotiert als zwischen diesem Strahl und
der Mitte des Brennraumes.

3. Brennkraftmaschine nach Anspruch 1, dadurch gekennzeichnet, daß die Form des Brennraumes eine Funktion
zum Winkel der einzustellenden Lage des Strahles des
Kraftstoffes ist, und daß diese Funktion so abgestimmt
ist, daß insbesondere bei maximaler Einspritzmenge alle
im Brennraum rotierenden Luftschichten vom Strahl des
Kraftstoffes gekreuzt werden.

4. Brennkraftmaschine nach Anspruch 1, dadurch gekennzeichnet, daß die Rotation aller Luftschichten im Brennraum
und die Zeit der Einspritzung des Kraftstoffes in diesen
einer Winkelbewegung (Drehwinkel) der Kurbelwelle von

$25^O \pm 5^O$ Kurbelwinkel entspricht.

5. Brennkraftmaschine nach Anspruch 1, dadurch gekennzeichnet, daß für das Einbringen des Kraftstoffes in den Brennraum, wie an sich bekannt, Fördermittel dem Brennraum vorgelagert sind, und daß diese Fördermittel je nach Art des Kraftstoffes auch weitere, die Energie des Einbringens des Kraftstoffes in den Brennraum aufzubringende Förderteile, insbesondere für feste Bestandteile des Kraftstoffes, aufweisen.

6. Brennkraftmaschine nach Anspruch 5, dadurch gekennzeichnet, daß die Förderteile von einer Nebenkammer gebildet werden, und daß die Energie dieser Nebenkammer auf die Energie der im Brennraum rotierenden Luftschichten abgestimmt ist.

7. Brennkraftmaschine nach Anspruch 6, dadurch gekennzeichnet, daß die Energie der Nebenkammer für alle Lastbereiche der Brennkraftmaschine konstant haltbar ist, und daß bei Teillast nur ein Teil der im Brennraum rotierenden Verbrennungsluft mit dem Kraftstoff stöchiometrisch mischbar ist.

8. Brennkraftmaschine nach Anspruch 5, dadurch gekennzeichnet, daß die Förderteile von einer Nebenkammer mit Zumeßpumpe und Mischdüse gebildet werden, und daß mittels dieser Förderteile der Kraftstoff insbesondere unter Zufügen schon verbrannter Bestandteile in den Brennraum einbringbar ist.

9. Brennkraftmaschine nach Anspruch 1, dadurch gekennzeichnet, daß die Regelung der Leistung der Brennkraftmaschine eine Funktion der Zuführung des Kraftstoffes in die Mischdüse ist.

10. Brennkraftmaschine nach Anspruch 1, dadurch gekennzeichnet, daß diese, wie an sich bekannt, drei Zylinder
aufweist, und daß diese Zylinder zum Zwecke eines
größeren Abstandes zwischen dem Strahl des eingespritzten
Kraftstoffes und einer den Brennraum jedes Zylinders
begrenzenden Wand ein großes Hubvolumen aufweisen.

11. Brennkraftmaschine nach Anspruch 10, dadurch gekennzeichnet, daß zum Zwecke des Verringerns des Heizwertbedarfes für die Verbrennung des Kraftstoffes die
drei Zylinder um nur einen Kurbelhub gegeneinander versetzt, angeordnet sind.

12. Brennkraftmaschine nach Anspruch 1, dadurch gekennzeichnet, daß zum Verbessern des Temperaturniveaus und/
oder des Heizwertbedarfes für die Verbrennung des Kraftstoffes mindestens zwei Brennkraftmaschinen für das
Aufbringen des maximalen Leistungsbedarfes vorgesehen
sind, von denen mindestens eine bei teilweiser Auslastung der Antriebskraft abschaltbar ist.

13. Brennkraftmaschine nach Anspruch 1, dadurch gekennzeichnet, daß am Brennraum eine ins Freie führende Abgasleitung angeschlossen ist, und daß in dieser Leitung
ein elektrostatisches Filter vorgesehen ist.

14. Brennkraftmaschine nach Anspruch 1, dadurch gekennzeichnet, daß der Brennraum so stark wärmegedämmt ist, daß
die Aufheizung der Kolbenabdichtung gering und somit weit
unter einer klemmenden Ausdehnung der Kolbenringe gehalten wird, und daß der Gleitspalt am Kolbenmantel über
dem ersten Kolbenring auf weniger als 1/1000 (ein
Tausendstel) des Durchmessers des Kolbens einstellbar ist.

Fig.1

Fig.2

Fig. 3

Fig. 4

Fig. 5

Fig. 6

Fig. 7

Fig. 8

| | EUROPÄISCHER RECHERCHENBERICHT | Nummer der Anmeldung |
|---|---|---|
| Europäisches Patentamt | | EP 80 10 4032 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 241 041 (ELSBETT) <br><br> * Seite 2, unten; Seite 3, Mitte; Seite 5, Patentanspruch 1 bis Seite 6, Patentanspruch 3; Figuren 1,2 * <br><br> -- | 1 |
| X | DE - A - 2 241 355 (ELSBETT) <br><br> * Seiten 2 und 3 * <br><br> -- | 1 |
| A | GB - A - 512 936 (BUELL) <br><br> * Seite 1, Zeile 73 bis Seite 2, Zeile 51 * <br><br> -- | |
| A | GB - A - 1 063 962 (KHD) <br><br> * Seite 1, Zeilen 34-43 * <br><br> -- | |
| A/D | DE - A - 1 576 014 (ELSBETT) <br><br> * Seite 6, Patentanspruch 1 * <br><br> -- | 3 |
| D | DE - A - 2 545 588 (ELSBETT) <br><br> ------- | |

### KLASSIFIKATION DER ANMELDUNG (Int.Cl ³)

F 02 B 23/06

### RECHERCHIERTE SACHGEBIETE (Int. Cl. ³)

F 02 B

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-10-1980 | TATUS |